# EUROPEAN PATENT SPECIFICATION

(11) **EP 3 779 916 B1**
(45) Date of publication and mention of the grant of the patent: **03.05.2023**
(21) Application number: 19780994.0
(22) Date of filing: 26.03.2019
(51) Int. Cl.: G08C 15/00, G01F 3/22, G08C 17/00, H04Q 9/00, G01D 4/00

(54) **GAS SHUTOFF DEVICE AND WIRELESS DEVICE FOR GAS SHUTOFF DEVICE**
GASABSPERRVORRICHTUNG UND DRAHTLOSE VORRICHTUNG FÜR GASABSPERRVORRICHTUNG
DISPOSITIF D'ARRÊT DE GAZ ET DISPOSITIF SANS FIL POUR DISPOSITIF D'ARRÊT DE GAZ

(30) Priority: 02.04.2018 JP 2018070568; 02.04.2018 JP 2018070569
(43) Date of publication of application: 17.02.2021
(73) Proprietor: Panasonic Intellectual Property Management Co., Ltd., Osaka-shi, Osaka 540-6207 (JP)
(72) Inventor: YOKOHATA, Mitsuo, Osaka-shi, Osaka 540-6207 (JP); TERAMOTO, Shota, Osaka-shi, Osaka 540-6207 (JP); KITANO, Yusuke, Osaka-shi, Osaka 540-6207 (JP); SAKATA, Masaaki, Osaka-shi, Osaka 540-6207 (JP)
(74) Representative: SSM Sandmair
(86) International application number: PCT/JP2019/012642
(87) International publication number: WO 2019/194019

(56) References cited:
- WO-A1-2019/176626
- JP-A- 2007 199 002
- JP-A- 2011 022 749
- JP-A- 2011 022 749
- JP-A- 2012 133 616
- JP-A- 2016 148 572
- JP-A- 2016 148 572
- JP-A- 2017 067 388
- JP-A- 2018 025 514
- JP-A- 2018 025 514
- JP-A- 2018 054 512
- US-A1- 2008 106 434

## Description

### TECHNICAL FIELD

The present invention relates to a gas shutoff device and a wireless device for a gas shutoff device, each having an appliance determination function and a communication function.

### BACKGROUND ART

Wireless automatic meter-reading systems have been practically used for automatic measurement of a meter-reading value of a meter that measures the amount of usage of utilities such as gas, electric power, and water.

Meters for gas, water, and the like, of these systems each use a battery as a power supply due to difficulty in receiving electric power from a commercial power supply. This requires a meter using a battery as a power supply to save power. Besides this, there is a trend of allowing a meter to acquire various kinds of information to improve value of the meter by reading out the amount of usage more minutely by increasing meter-reading frequency, reading out a meter-reading value at a short interval, and adding an additional sensor, from a viewpoint of energy management including visualization of energy consumption and a viewpoint of energy monitoring, and a viewpoint of added value.

From these viewpoints, various methods have been studied to reduce consumption current of a meter or a wireless device for the meter. Then, proposed communication methods include a method of performing communication by using a low power wide area (LPWA) communication module at all times or by shortening a communication interval. This proposed method is based on the assumption that a gas meter or a wireless device for the gas meter will be used for 10 years without battery replacement, and thus requiring power saving. From the viewpoint of added value, reduction in current consumption and responsiveness are also important factors. For example, a meter is intermittently driven, and a master unit transmits a synchronization signal at a short interval to achieve both reduction in current consumption and responsiveness (e.g., refer to PTL 1). A gas meter having a shutoff valve for shutting off a flow path of gas can be referred to as a gas shutoff device, and a meter wireless device used for a gas meter having a shutoff valve can be referred to as a wireless device for a gas shutoff device.

### Citation List

### Patent Literature

PTL 1: Unexamined Japanese Patent Publication No. 2001-160990

JP 2011 022749 A discloses a gas shutoff device communicating with an external part. When the count value of a first check interval counting means reaches a first prescribed value, the device shortens the usable time of the appliance and operates a second check interval counting means. Whenever the count value of the second check interval counting means reaches a second prescribed value until an output is made from a check finish information output means, the device repetitively performs the initialization of the second check interval counting means and external communication so as to make an output to a shutoff means when the appliance is used after the number of reach times of the second check interval counting means reaches a prescribed value, and then the gas is shut off.

### SUMMARY OF THE INVENTION

The invention is set out in appended independent claims 1 and 2.

Unfortunately, although the conventional method can achieve power saving at a certain level, the power saving depends on limitation of transmission time of the master unit and a reception interval of the meter or the wireless device for the meter. Thus, the conventional method does not lead to reduction in current consumption at a certain level or more.

There is also a method of transmitting information to a master unit at timing of a meter or a wireless device for the meter, and acquiring the information from the master unit after the transmission. This method enables the meter or the wireless device for the meter to operate a communication part in a sleep mode or a low-consumption mode except for the timing of the transmission, and thus enabling power saving.

When this method is used for power saving, the meter or the wireless device for the meter generally transmits information to the master unit at a very long interval, and also a response is received from the master unit at the interval. This causes a state of the meter to be unknown for a long time, or a state where even when setting change data is received from the master unit, the setting change cannot be reflected for a long time.

The meter or the wireless device for the meter in the present invention, i.e., the gas shutoff device or the wireless device for the gas shutoff device, changes a communication interval according to a kind of gas appliance determined based on a flow rate measured. This enables achieving power saving while ensuring required safety performance according to a gas appliance.

The gas shutoff device of the present invention includes a flow rate measurement unit that measures a flow rate of gas flowing through a flow path, an appliance determination unit that determines a gas appliance in use based on the flow rate of gas measured by the flow rate measurement unit, and a shutoff valve that shuts off the flow path, a wireless communication unit that periodically performs wireless communication with the outside, and a communication interval setting unit that sets a communication interval that is an interval in the wireless communication of the wireless communication unit. The communication interval setting unit sets the communication interval according to the gas appliance in use determined by the appliance determination unit.

This configuration enables achieving power saving while ensuring a minimum required communication frequency and required safety performance according to a gas appliance.

Furthermore, in the gas shutoff device according to the present invention the communication interval setting unit is configured to set the communication interval to a first predetermined interval when the appliance determination unit determines that no gas appliance is used, and the communication interval setting unit is configured to set the communication interval to an interval shorter than the first predetermined interval when (i) the appliance determination unit determines that the gas appliance in use is a stove, and (ii-1) gas at a first predetermined flow rate or more is continuously used by the gas appliance in use for a first predetermined time or more, or (ii-2) gas at a flow rate less than the first predetermined flow rate is continuously used by the gas appliance in use for a second predetermined time or more, the second predetermined time being set longer than the first predetermined time.

The wireless device for the gas shutoff device of the present invention communicates with the gas shutoff device including the flow rate measurement unit that measures a flow rate of gas flowing through the flow path, the appliance determination unit that determines the gas appliance based on the flow rate of gas measured by the flow rate measurement unit, and the shutoff valve that shuts off the flow path, the wireless device including at least a meter communication unit that obtains a determination result in the appliance determination unit, a wireless communication unit that periodically performs wireless communication with the outside, and a communication interval setting unit that sets a communication interval in the wireless communication unit. The communication interval setting unit sets the communication interval in response to the determination result obtained by the meter communication unit.

The configuration of changing the communication interval of the wireless device for the gas shutoff device according to the gas appliance determined by appliance determination performed by the gas shutoff device enables achieving power saving while ensuring a minimum required communication frequency and required safety performance.

Furthermore, in the wireless device according to the present invention the communication interval setting unit is configured to set the communication interval to a first predetermined interval when the appliance determination unit determines that no gas appliance is used, and the communication interval setting unit is configured to set the communication interval to an interval shorter than the first predetermined interval when (i) the appliance determination unit determines that the gas appliance in use is a stove, and (ii-1) gas at a first predetermined flow rate or more is continuously used by the gas appliance in use for a first predetermined time or more, or (ii-2) gas at a flow rate less than the first predetermined flow rate is continuously used by the gas appliance in use for a second predetermined time or more, the second predetermined time being set longer than the first predetermined time.

### BRIEF DESCRIPTION OF DRAWINGS

FIG. 1 is a block diagram illustrating a gas shutoff device according to a first exemplary embodiment.
FIG. 2 is a diagram showing an example of communication interval setting of the gas shutoff device in the first exemplary embodiment.
FIG. 3 is a diagram showing communication interval setting of the gas shutoff device according to the first exemplary embodiment, suitable for a determined appliance.
FIG. 4 is a diagram showing communication interval setting of a gas shutoff device according to a second exemplary embodiment, suitable for a determined appliance.
FIG. 5 is a block diagram illustrating a wireless device for a gas shutoff device and the gas shutoff device according to a third exemplary embodiment.

### DESCRIPTION OF EMBODIMENTS

Exemplary embodiments of a gas shutoff device according to the present invention will be described below with reference to the accompanying drawings. In the exemplary embodiments described below, a gas meter is taken as an example of the gas shutoff device, and its processing will be described. In the drawings, the same components are designated by the same reference numerals, and duplicated description of the components already described will be eliminated. The present invention is not limited to the exemplary embodiments described below.

### (First exemplary embodiment)

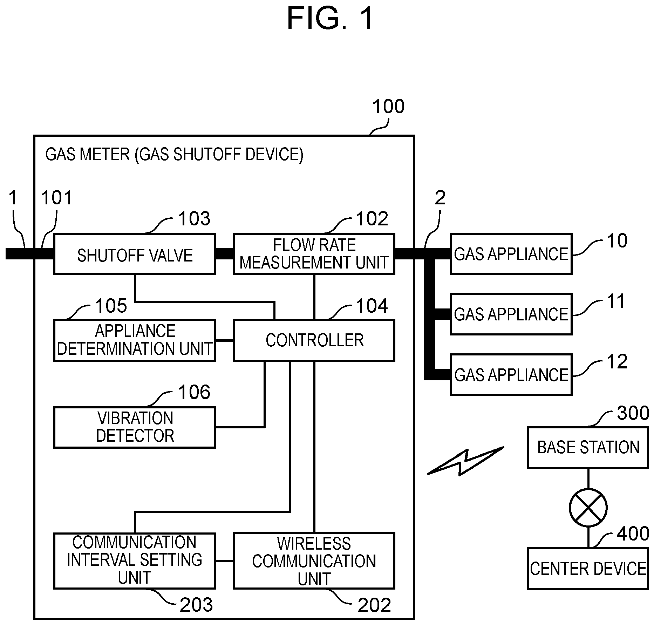

FIG. 1 is a block diagram of a gas meter that is a gas shutoff device according to a first exemplary embodiment of the present invention.

In FIG. 1, gas meter 100 includes flow path 101 through which a gas flows, flow rate measurement unit 102 that measures a flow rate of the gas flowing through flow path 101, and shutoff valve 103 that shuts off flow path 101. Gas meter 100 also includes controller 104 that transmits and receives signals to and from components inside gas meter 100 including shutoff valve 103, appliance determination unit 105 that determines a gas appliance connected to gas meter 100, and vibration detector 106 that detects a vibration caused by an earthquake or the like. Gas meter 100 further includes wireless communication unit 202 that communicates with base station 300 that is an external device, and communication interval setting unit 203 that controls a communication interval in wireless communication unit 202. Gas meter 100 is connected to gas pipe 1, and gas appliances 10 to 12 are connected to a downstream side of gas meter 100 with gas pipe 2.

Components and functions in the block will be described below.

Flow rate measurement unit 102 that measures a flow rate of gas flowing through flow path 101 is composed of an ultrasonic flowmeter. Flow rate measurement unit 102 composed of an ultrasonic flowmeter emits ultrasonic waves at a predetermined time interval (e.g., every 0.5 seconds or 2 seconds) for gas as fluid flowing through flow path 101 to measure a flow rate of the gas, and thus can use a general ultrasonic flowmeter. Besides this, flow rate measurement unit 102 can be composed of a circuit for calculating a flow rate of gas using thermal fluctuation, or can be composed of a metering membrane if gas is measured, and thus is not particularly limited in configuration.

Shutoff valve 103 is composed of an electromagnetic valve, a valve using a stepping motor, or the like, and the shutoff valve can be opened and closed in response to an instruction from controller 104 described later. Shutoff valve 103 functions to supply gas to gas appliances 10 to 12 connected subsequently to gas meter 100 when opened, and functions to stop supply of the gas when closed.

Appliance determination unit 105 determines a kind of gas appliance (a water heater, a fan heater, a stove, or the like) having been started to be used, based on a flow rate change pattern obtained at a start of operation of the corresponding one of gas appliances 10 to 12 based on a value of a flow rate of gas acquired by flow rate measurement unit 102.

Vibration detector 106 is composed of a vibration sensor, an acceleration sensor, etc., to detect a vibration such as an earthquake, determine that an earthquake has occurred when a vibration of predetermined magnitude or more is detected, and output an earthquake occurrence signal or output a vibration value in accordance with magnitude of vibration.

Controller 104 is mainly composed of a microcomputer, a memory, a clock, a storage device, and the like (none of which is illustrated). Controller 104 is connected to flow rate measurement unit 102, shutoff valve 103, appliance determination unit 105, vibration detector 106, and wireless communication unit 202 described later to exchange signals. Then, controller 104 calculates and integrates a flow rate of gas based on flow rate data measured by flow rate measurement unit 102, determines whether an abnormality has occurred, and shuts off flow path 101 using shutoff valve 103. Examples of the abnormality leading to shutoff of flow path 101 due to shutoff valve 103 include an abnormality in which a flow rate of gas exceeds a preset maximum flow rate, an abnormality in which usage time of gas exceeds a preset maximum usage time, and an earthquake or the like detected by vibration detector 106.

Controller 104 controls wireless communication unit 202 based on a predetermined communication protocol. Wireless communication unit 202 transmits a stored integrated value, an output result of vibration detector 106, and a control result, a state, and the like of shutoff valve 103 to base station 300 that is an external device of gas meter 100.

Wireless communication unit 202 is composed of a transmission circuit, a reception circuit, a demodulation circuit, a modulation circuit, a voltage controlled oscillator (VCO) circuit, an antenna, and the like (none of which is illustrated), and communicates with base station 300 outside gas meter 100, i.e., performs transmission and reception, according to a predetermined protocol. Then, wireless communication unit 202 transmits an integrated value of the amount of gas usage obtained by controller 104, transmits a detected abnormality to base station 300, or controls the gas meter in response to an instruction from base station 300. This enables flow path 101 to be shut off by shutoff valve 103 of gas meter 100 in response to an instruction from center device 400.

Communication interval setting unit 203 has a function of controlling a communication interval in wireless communication unit 202 based on information obtained from controller 104. Details will be described later.

Base station 300 communicates with wireless communication unit 202 of gas meter 100 using a communication unit (not illustrated). Base station 300 also communicates with center device 400 managed and operated by a gas company or the like through a network line or the like. There is no problem even when center device 400 also serves as base station 300.

The above configuration enables gas meter 100 and center device 400 to communicate with each other, so that data such as the amount of gas usage obtained by gas meter 100 can be communicated with center device 400. Center device 400 can instruct gas meter 100 to shut off gas using shutoff valve 103, for example.

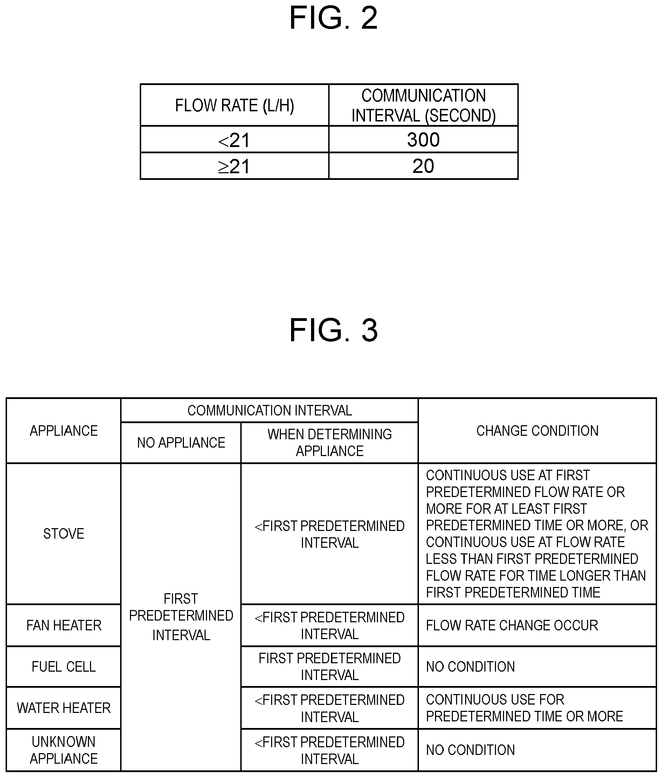

FIG. 2 shows an example of first communication interval setting performed by communication interval setting unit 203 of gas meter 100, serving as a gas shutoff device. The example of first communication interval setting shows that when a flow rate of gas is less than a predetermined flow rate (21 L/H), the communication interval is set to 300 seconds, and when a flow rate of gas is equal to or more than the predetermined flow rate (21 L/H), the communication interval is set to 20 seconds. This predetermined flow rate (21 L/H) is a flow rate of gas enabling determination that a gas appliance is in use. A flow rate of gas less than the predetermined flow rate enables determination that no gas is in use. A flow rate of gas equal to or more than the predetermined flow rate enables determination that some kind of gas appliance is in use.

Appliance determination unit 105 first determines whether a gas appliance is in use using a flow rate of gas obtained by flow rate measurement unit 102. When it is determined that a gas appliance is in use, a kind of gas appliance (stove, fan heater, fuel cell, water heater, and the like) is determined using a predetermined determination method. When even determination that a gas appliance is used cannot determine the gas appliance, the determination results in unknown appliance.

Hereinafter, a relationship between a gas appliance determined by appliance determination unit 105 and a communication interval set by communication interval setting unit 203 will be described.

FIG. 3 shows determination results of appliances in appliance determination unit 105 and setting of communication intervals set under changing conditions such as a flow rate of gas and usage time. As shown in FIG. 3, the communication intervals are set as follows according to the corresponding determined appliances.

First, when an appliance is not determined in appliance determination unit 105, including when no gas appliance is used, a first predetermined interval (e.g., 300 seconds) is set.

Next, when appliance determination unit 105 determined that a gas appliance in use is a stove, the communication interval is changed under a condition where the stove is continuously used at a first predetermined flow rate (e.g., 60 L/h) or more for a first predetermined time (e.g., 30 minutes) or more, or where the stove is continuously used at a flow rate of gas (e.g., 40 L/h) smaller than the first predetermined flow rate for a second predetermined time (e.g., 2 hours) set longer than the first predetermined time. When this condition for change is satisfied, the communication interval is set to a communication interval (e.g., 20 seconds) shorter than the first predetermined interval.

The stove may be forgotten to be turned off in a normally unexpected use state where the stove is used for a long time with high heat, or a state where the stove is used for more than an expected time even with low heat, so that shortening the communication interval enables center device 400 to determine early an abnormal use state, and thus notifying a user. Alternatively, when contact with the user is impossible, center device 400 can instruct gas meter 100 serving as a gas shutoff device about shut-off.

When appliance determination unit 105 determines that a gas appliance in use is a fan heater, the communication interval is changed under a condition where a flow rate of gas changes. The communication interval is set to a communication interval (e.g., 20 seconds) shorter than the first predetermined interval at timing when the flow rate changes, which is the condition for change. This enables center device 400 to acquire flow rate information when the flow rate changes in a short period of time, so that stepwise change in flow rate, which is unique flow rate control of the fan heater, can be monitored, thereby enabling occurrence of an abnormality, or the like to be grasped. This also enables a model of the fan heater to be specified.

In other words, even fan heaters identical in kind of appliance differ in characteristics of flow rate control depending on their models. Thus, when the flow rate characteristics associated with the flow rate control for each model are measured and compared with flow rate characteristics for each model that are preliminarily acquired, a mode can be specified. However, specifying a model using gas meter 100 requires the flow rate characteristics for each model to be held in a memory or the like and software for specifying a model to be installed. This causes increase of the memory of gas meter 100 to increase a load of a microcomputer for control, so that it is difficult to specify a model of the fan heater using gas meter 100. In contrast, there is no such restriction in center device 400, so that a model of the fan heater can be easily specified by center device 400.

A period of time for setting a communication interval to an interval shorter than the first predetermined interval may be limited to a predetermined period of time from change in flow rate that is the condition for changing a communication interval. In this case, the communication interval may be returned to the first predetermined interval after changed from the first predetermined interval to the shorter communication interval for the predetermined period of time.

When appliance determination unit 105 determines that a gas appliance in use is a fuel cell, no condition for changing the communication interval is set, and the communication interval is maintained at the first predetermined interval. This is because a flow rate of gas gradually changes in a fuel cell and shortening particularly the communication interval is unnecessary.

When appliance determination unit 105 determines that a gas appliance in use is a water heater, continuous use of the water heater for a predetermined time or longer is a condition for changing the communication interval. Thus, when the water heater is used for a long time (e.g., 30 minutes), the communication interval is set shorter (e.g., 20 seconds) than the first predetermined interval. Then, when use of the water heater for a long time is detected, the water heater may be forgotten to be turned off, and thus shortening the communication interval enables center device 400 to determine early an abnormal use state, and thus notifying a user. Alternatively, when contact with the user is impossible, center device 400 can instruct gas meter 100 serving as a gas shutoff device about shut-off.

When appliance determination unit 105 determines that a gas appliance in use is an unknown appliance, the communication interval is set to an interval (e.g., 20 seconds) shorter than the first predetermined interval. That is, no condition for changing the communication interval after the gas appliance in use is determined is set. This change in communication interval enables center device 400 to acquire flow rate information and the like from the gas meter at a short interval, and thus enabling monitoring whether there is any abnormal behavior.

It is needless to say that when a stop of use of the gas appliance is detected, the communication interval is returned to the first predetermined interval.

As described above, the present exemplary embodiment enables optimizing responsiveness from center device 400 to gas meter 100 according to each of gas appliances 10 to 12 during use in which the corresponding one of gas appliances 10 to 12 operates. Thus, even when a gas appliance is remotely shut off in response to notification from a user away from home as a service to forgetting to turn off a gas appliance of a gas company operating center device 400, the gas appliance can be shut off quickly, and thus safety can be ensured.

### (Second exemplary embodiment)

Next, a relationship between a communication interval set in communication interval setting unit 203 of gas meter 100 serving as a gas shutoff device in a second exemplary embodiment, and a gas appliance determined by appliance determination unit 105, will be described.

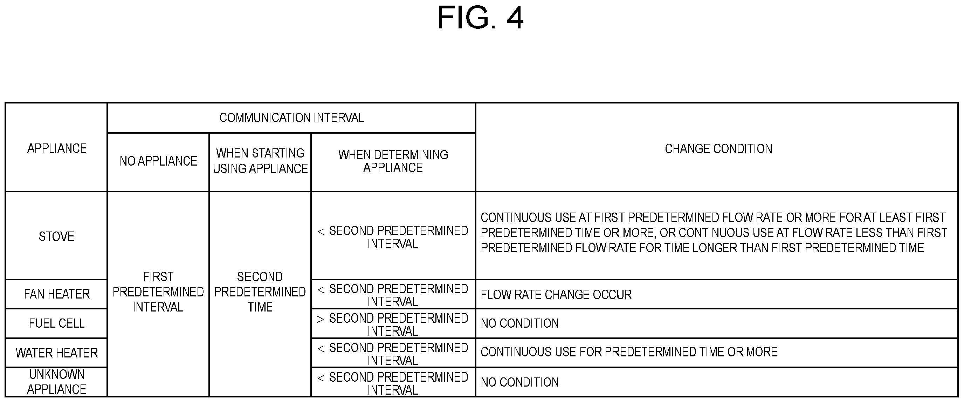

FIG. 4 shows appliance determination results of the gas shutoff device according to the present exemplary embodiment and setting of communication intervals set under changing conditions such as a flow rate of gas and usage time, and the communication intervals are set as described below according to corresponding determined appliances.

First, when an appliance is not determined in appliance determination unit 105, including when no gas appliance is used, a first predetermined interval (e.g., 300 seconds) is set. Subsequently, when a start of use of a gas appliance is detected, first, the communication interval is set to a second predetermined interval shorter than the first predetermined interval (e.g., 60 seconds), and then is set to a communication interval described below according to the gas appliance determined by appliance determination unit 105.

Next, when appliance determination unit 105 determines that a gas appliance in use is a stove, the communication interval is changed under a condition where the stove is continuously used at a first predetermined flow rate (e.g., 60 L/h) or more for a first predetermined time (e.g., 30 minutes) or more, or where the stove is continuously used at a flow rate of gas (e.g., 40 L/h) smaller than the first predetermined flow rate for a second predetermined time (e.g., 2 hours) set longer than the first predetermined time. When this condition for change is satisfied, the communication interval is set to a communication interval (e.g., 20 seconds) shorter than the second predetermined interval.

The stove may be forgotten to be turned off in a normally unexpected use state where the stove is used for a long time with high heat, or a state where the stove is used for more than an expected time even with low heat, so that shortening the communication interval enables center device 400 to determine early an abnormal use state, and thus notifying a user. Alternatively, when contact with the user is impossible, center device 400 can instruct gas meter 100 serving as a gas shutoff device about shut-off.

When appliance determination unit 105 determines that a gas appliance in use is a fan heater, the communication interval is changed under a condition where a flow rate of gas changes. The communication interval is set to a communication interval (e.g., 20 seconds) shorter than the second predetermined interval at timing when the flow rate changes, which is the condition for change. This enables center device 400 to acquire flow rate information when the flow rate changes in a short period of time, so that stepwise change in flow rate, which is unique flow rate control of the fan heater, can be monitored, thereby enabling occurrence of an abnormality, or the like to be grasped. As with the first exemplary embodiment, this also enables a model of the fan heater to be specified.

When appliance determination unit 105 determines that a gas appliance in use is a fuel cell, the communication interval is set longer (e.g., 300 seconds) than the second predetermined interval. That is, no condition for changing the communication interval after the gas appliance in use is determined is set. A flow rate of gas gradually changes in a fuel cell, so that lengthening particularly the communication interval causes no problem.

When appliance determination unit 105 determines that a gas appliance in use is a water heater, continuous use of the water heater for a predetermined time or longer is a condition for changing the communication interval. Thus, when the water heater is used for a long time (e.g., 30 minutes), the communication interval is set shorter (e.g., 20 seconds) than the second predetermined interval. Then, when use of the water heater for a long time is detected, the water heater may be forgotten to be turned off, and thus shortening the communication interval enables center device 400 to determine early an abnormal use state, and thus notifying a user. Alternatively, when contact with the user is impossible, center device 400 can instruct gas meter 100 serving as a gas shutoff device about shut-off.

When appliance determination unit 105 determines that a gas appliance in use is an unknown appliance, the communication interval is set to an interval (e.g., 20 seconds) shorter than the second predetermined interval. That is, no condition for changing the communication interval after the gas appliance in use is determined is set. This change in communication interval enables center device 400 to acquire flow rate information and the like from the gas meter at a short interval, and thus enabling monitoring whether there is any abnormal behavior.

It is needless to say that when a stop of use of the gas appliance is detected, the communication interval is returned to the first predetermined interval.

As described above, the present exemplary embodiment enables optimizing responsiveness from center device 400 to gas meter 100 according to each of gas appliances 10 to 12 during use in which the corresponding one of gas appliances 10 to 12 operates. Thus, even when a gas appliance is remotely shut off in response to notification from a user away from home as a service to forgetting to turn off a gas appliance of a gas company operating center device 400, the gas appliance can be shut off quickly, and thus safety can be ensured.

As described above, according to gas meter 100 serving as the gas shutoff device in each of the first exemplary embodiment and the second exemplary embodiment, the communication interval is changed according to a gas appliance determined by appliance determination unit 105. Then, when the communication interval is changed according to a kind of determined gas appliance while a minimum required communication frequency is ensured, electric power can be saved while safety performance required according to the gas appliance is ensured.

The present invention is not limited to the above-described exemplary embodiments, and can be implemented in various aspects without departing from the scope of the present invention. For example, in the present exemplary embodiment, the determination flow rate for use of a gas appliance is described as 21 L/H. However, when a gas appliance installed after installation of gas meter 100 is preliminarily known, the determination flow rate can be set corresponding to a minimum flow rate of the gas appliance. Although the communication interval has been described assuming that the first predetermined interval is 300 seconds and the second predetermined interval is 60 seconds, it is needless to say that the communication interval can be arbitrarily set in accordance with battery capacity and required responsiveness.

### (Third exemplary embodiment)

Hereinafter, a wireless device for a gas shutoff device according to a third exemplary embodiment of the present invention will be described with reference to the accompanying drawings. In the exemplary embodiment described below, a wireless slave unit connected with a wire to a gas meter serving as a gas shutoff device is taken as an example of the wireless device for a gas shutoff device, and its processing will be described. In the drawings, the same components as those of the gas shutoff device according to the first exemplary embodiment are designated by the same reference numerals. The present invention is not limited to the exemplary embodiments described below.

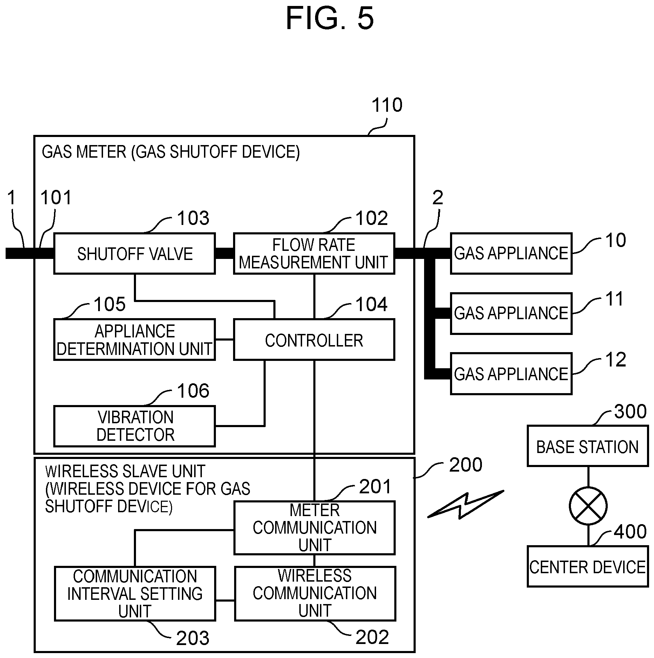

FIG. 5 is a block diagram of a wireless slave unit serving as the wireless device for a gas shutoff device according to the third exemplary embodiment of the present invention and a gas meter serving as the gas shutoff device, connected to the wireless slave unit with a wire.

FIG. 5 illustrates gas meter 110 that includes flow path 101 through which gas flows, flow rate measurement unit 102 that measures a flow rate of gas flowing through flow path 101, and shutoff valve 103 that shuts off flow path 101. Gas meter 110 also includes controller 104 that transmits and receives signals to and from components inside gas meter 110 including shutoff valve 103, appliance determination unit 105 that determines a gas appliance connected to gas meter 110, and vibration detector 106 that detects a vibration caused by an earthquake or the like. Gas meter 110 is connected to gas pipe 1, and gas appliances 10 to 12 are connected to a downstream side of gas meter 110 with gas pipe 2.

Wireless slave unit 200, serving as a wireless device for a gas shutoff device, includes meter communication unit 201 connected to controller 104 of gas meter 110, wireless communication unit 202 connected to meter communication unit 201, and communication interval setting unit 203.

Components and functions in the block will be described below.

Flow rate measurement unit 102 that measures a flow rate of gas flowing through flow path 101 is composed of an ultrasonic flowmeter. Flow rate measurement unit 102 composed of an ultrasonic flowmeter emits ultrasonic waves at a predetermined time interval (e.g., every 0.5 seconds or 2 seconds) for gas as fluid flowing through flow path 101 to measure a flow rate of the gas, and thus can use a general ultrasonic flowmeter. Besides this, flow rate measurement unit 102 can be composed of a circuit for calculating a flow rate of gas using thermal fluctuation, or can be composed of a metering membrane if gas is measured, and thus is not particularly limited in configuration.

Shutoff valve 103 is composed of an electromagnetic valve, a valve using a stepping motor, or the like, and the shutoff valve can be opened and closed in response to an instruction from controller 104 described later. Shutoff valve 103 functions to supply gas to gas appliances 10 to 12 connected subsequently to gas meter 110 when opened, and functions to stop supply of the gas when closed.

Appliance determination unit 105 determines a kind of gas appliance (a water heater, a fan heater, a stove, or the like) having been started to be used, based on a flow rate change pattern obtained at a start of operation of the corresponding one of gas appliances 10 to 12 based on a value of a flow rate of gas acquired by flow rate measurement unit 102.

Vibration detector 106 is composed of a vibration sensor, an acceleration sensor, etc., to detect a vibration such as an earthquake, determine that an earthquake has occurred when a vibration of predetermined magnitude or more is detected, and output an earthquake occurrence signal or output a vibration value in accordance with magnitude of vibration.

Controller 104 is mainly composed of a microcomputer, a memory, a clock, a storage device, and the like (none of which is illustrated). Controller 104 is connected to flow rate measurement unit 102, shutoff valve 103, appliance determination unit 105, and vibration detector 106 to exchange signals, and also is connected to meter communication unit 201 described later using a communication interface (not illustrated) to exchange signals. Then, controller 104 calculates and integrates a flow rate of gas based on flow rate data measured by flow rate measurement unit 102, determines whether an abnormality has occurred, and shuts off flow path 101 using shutoff valve 103. Examples of the abnormality leading to shutoff of flow path 101 due to shutoff valve 103 include an abnormality in which a flow rate of gas exceeds a preset maximum flow rate, an abnormality in which usage time of gas exceeds a preset maximum usage time, and an earthquake or the like detected by vibration detector 106.

Controller 104 also has a function of communicating with meter communication unit 201 of wireless slave unit 200, serving as a wireless device for a gas shutoff device, based on a predetermined communication protocol.

Meter communication unit 201 communicates with controller 104 to receive a determination result in appliance determination unit 105, an integrated value stored in controller 104, an output result of vibration detector 106, a control result and a state of shutoff valve 103, and the like from controller 104. Alternatively, meter communication unit 201 transmits control data and the like received from center device 400 described later to controller 104.

Wireless communication unit 202 is composed of a transmission circuit, a reception circuit, a demodulation circuit, a modulation circuit, a voltage controlled oscillator (VCO) circuit, an antenna, and the like (none of which is illustrated), and communicates with base station 300 outside gas meter 110, i.e., performs transmission and reception, according to a predetermined protocol. Then, wireless communication unit 202 transmits an integrated value of the amount of gas usage obtained using meter communication unit 201, or a detected abnormality to base station 300, or transmits control data instructed from base station 300 to gas meter 110 using meter communication unit 201. This enables flow path 101 to be shut off by shutoff valve 103 of gas meter 110 in response to an instruction from center device 400.

Communication interval setting unit 203 has a function of controlling a communication interval in wireless communication unit 202 based on information obtained using meter communication unit 201. Details will be described later.

Base station 300 communicates with wireless communication unit 202 of wireless slave unit 200 serving as a wireless device for a gas shutoff device using a communication unit (not illustrated). Base station 300 also communicates with center device 400 managed and operated by a gas company or the like through a network line or the like. There is no problem even when center device 400 also serves as base station 300.

The above configuration enables gas meter 110 to communicate with center device 400 using wireless slave unit 200, so that data such as the amount of gas usage obtained by gas meter 110 can be communicated with center device 400. Center device 400 can instruct gas meter 110 to shut off gas using shutoff valve 103, for example.

Next, an example of communication interval setting between wireless communication unit 202 provided in wireless slave unit 200 serving as a wireless device for a gas shutoff device in the present exemplary embodiment and base station 300. However, the example of the communication interval setting in the present exemplary embodiment is similar to the example of the communication interval setting in the first exemplary embodiment, and thus will be described with reference to FIGS. 2 and 3.

FIG. 2 shows an example of first communication interval setting performed by communication interval setting unit 203 of wireless slave unit 200 serving as a wireless device for a gas shutoff device. The example of first communication interval setting shows that when a flow rate of gas is less than a predetermined flow rate (21 L/H), the communication interval is set to 300 seconds, and when a flow rate of gas is equal to or more than the predetermined flow rate (21 L/H), the communication interval is set to 20 seconds. This predetermined flow rate (21 L/H) is a flow rate of gas enabling determination that a gas appliance is in use. A flow rate of gas less than the predetermined flow rate enables determination that no gas is in use. A flow rate of gas equal to or more than the predetermined flow rate enables determination that some kind of gas appliance is in use.

Appliance determination unit 105 first determines whether a gas appliance is in use using a flow rate of gas obtained by flow rate measurement unit 102. When it is determined that a gas appliance is in use, a kind of gas appliance (stove, fan heater, fuel cell, water heater, and the like) is determined using a predetermined determination method. When even determination that a gas appliance is used cannot determine the gas appliance, the determination results in unknown appliance.

Hereinafter, a relationship between a gas appliance determined by appliance determination unit 105 and a communication interval set by communication interval setting unit 203 will be described.

FIG. 3 shows determination results of appliances in appliance determination unit 105 and setting of communication intervals set under changing conditions such as a flow rate of gas and usage time. As shown in FIG. 3, the communication intervals are set as follows according to the corresponding determined appliances.

First, when an appliance is not determined in appliance determination unit 105, including when no gas appliance is used, a first predetermined interval (e.g., 300 seconds) is set.

Next, when appliance determination unit 105 determines that a gas appliance in use is a stove, the communication interval is changed under a condition where the stove is continuously used at a first predetermined flow rate (e.g., 60 L/h) or more for a first predetermined time (e.g., 30 minutes) or more, or where the stove is continuously used at a flow rate less (e.g., 40 L/h) than the first predetermined flow rate for a second predetermined time (e.g., 2 hours) set longer than the first predetermined time. When this condition for change is satisfied, the communication interval is set to a communication interval (e.g., 20 seconds) shorter than the first predetermined interval.

The stove may be forgotten to be turned off in a normally unexpected use state where the stove is used for a long time with high heat, or a state where the stove is used for more than an expected time even with low heat, so that shortening the communication interval enables center device 400 to determine early an abnormal use state, and thus notifying a user. Alternatively, when contact with the user is impossible, center device 400 can instruct gas meter 110 serving as a gas shutoff device about shut-off.

When appliance determination unit 105 determines that a gas appliance in use is a fan heater, the communication interval is changed under a condition where a flow rate of gas changes. The communication interval is set to a communication interval (e.g., 20 seconds) shorter than the first predetermined interval at timing when the flow rate changes, which is the condition for change. This enables center device 400 to acquire flow rate information when the flow rate changes in a short period of time, so that stepwise change in flow rate, which is unique flow rate control of the fan heater, can be monitored, thereby enabling occurrence of an abnormality, or the like to be grasped. This also enables a model of the fan heater to be specified.

In other words, even fan heaters identical in kind of appliance differ in characteristics of flow rate control depending on their models. Thus, when the flow rate characteristics associated with the flow rate control for each model are measured and compared with flow rate characteristics for each model that are preliminarily acquired, a mode can be specified. However, specifying a model using gas meter 110 requires the flow rate characteristics for each model to be held in a memory or the like and software for specifying a model to be installed. This causes increase of the memory of gas meter 110 to increase a load of a microcomputer for control, so that it is difficult to specify a model of the fan heater using gas meter 110. In contrast, there is no such restriction in center device 400, so that a model of the fan heater can be easily specified by center device 400.

A period of time for setting a communication interval to an interval shorter than the first predetermined interval may be limited to a predetermined period of time from change in flow rate that is the condition for changing a communication interval. In this case, the communication interval may be returned to the first predetermined interval after changed from the first predetermined interval to the shorter communication interval for the predetermined period of time.

When appliance determination unit 105 determines that a gas appliance in use is a fuel cell, no condition for changing the communication interval is set, and the communication interval is maintained at the first predetermined interval. This is because a flow rate of gas gradually changes in a fuel cell and shortening particularly the communication interval is unnecessary.

When appliance determination unit 105 determines that a gas appliance in use is a water heater, continuous use of the water heater for a predetermined time or longer is a condition for changing the communication interval. Thus, when the water heater is used for a long time (e.g., 30 minutes), the communication interval is set shorter (e.g., 20 seconds) than the first predetermined interval. Then, when use of the water heater for a long time is detected, the water heater may be forgotten to be turned off, and thus shortening the communication interval enables center device 400 to determine early an abnormal use state, and thus notifying a user. Alternatively, when contact with the user is impossible, center device 400 can instruct gas meter 110 serving as a gas shutoff device about shut-off.

When appliance determination unit 105 determines that a gas appliance in use is an unknown appliance, the communication interval is set to an interval (e.g., 20 seconds) shorter than the first predetermined interval. That is, no condition for changing the communication interval after the gas appliance in use is determined is set. This change in communication interval enables center device 400 to acquire flow rate information and the like from the gas meter at a short interval, and thus enabling monitoring whether there is any abnormal behavior.

It is needless to say that when a stop of use of the gas appliance is detected, the communication interval is returned to the first predetermined interval.

As described above, the present exemplary embodiment enables optimizing responsiveness from center device 400 to gas meter 110 according to each of gas appliances 10 to 12 during use in which the corresponding one of gas appliances 10 to 12 operates. Thus, even when a gas appliance is remotely shut off in response to notification from a user away from home as a service to forgetting to turn off a gas appliance of a gas company operating center device 400, the gas appliance can be shut off quickly, and thus safety can be ensured.

### (Fourth exemplary embodiment)

Next, a relationship between a communication interval set in communication interval setting unit 203 constituting a wireless slave unit serving as a wireless device for a gas shutoff device in a fourth exemplary embodiment, and a gas appliance determined by appliance determination unit 105, will be described.

FIG. 4 shows appliance determination results of the gas shutoff device according to the present exemplary embodiment and setting of communication intervals set under changing conditions such as a flow rate of gas and usage time, and the communication intervals are set as described below according to corresponding determined appliances.

First, when an appliance is not determined in appliance determination unit 105, including when no gas appliance is used, a first predetermined interval (e.g., 300 seconds) is set. Subsequently, when a start of use of a gas appliance is detected, first, the communication interval is set to a second predetermined interval shorter than the first predetermined interval (e.g., 60 seconds), and then is set to a communication interval described below according to the gas appliance determined by appliance determination unit 105.

Next, when appliance determination unit 105 determines that a gas appliance in use is a stove, the communication interval is changed under a condition where the stove is continuously used at a first predetermined flow rate (e.g., 60 L/h) or more for a first predetermined time (e.g., 30 minutes) or more, or where the stove is continuously used at a flow rate of gas (e.g., 40 L/h) smaller than the first predetermined flow rate for a second predetermined time (e.g., 2 hours) set longer than the first predetermined time. When this condition for change is satisfied, the communication interval is set to a communication interval (e.g., 20 seconds) shorter than the second predetermined interval.

The stove may be forgotten to be turned off in a normally unexpected use state where the stove is used for a long time with high heat, or a state where the stove is used for more than an expected time even with low heat, so that shortening the communication interval enables center device 400 to determine early an abnormal use state, and thus notifying a user. Alternatively, when contact with the user is impossible, center device 400 can instruct gas meter 110 serving as a gas shutoff device about shut-off.

When appliance determination unit 105 determines that a gas appliance in use is a fan heater, the communication interval is changed under a condition where a flow rate of gas changes. The communication interval is set to a communication interval (e.g., 20 seconds) shorter than the second predetermined interval at timing when the flow rate changes, which is the condition for change. This enables center device 400 to acquire flow rate information when the flow rate changes in a short period of time, so that stepwise change in flow rate, which is unique flow rate control of the fan heater, can be monitored, thereby enabling occurrence of an abnormality, or the like to be grasped. As with the third exemplary embodiment, this also enables a model of the fan heater to be specified.

When appliance determination unit 105 determines that a gas appliance in use is a fuel cell, the communication interval is set longer (e.g., 300 seconds) than the second predetermined interval. That is, no condition for changing the communication interval after the gas appliance in use is determined is set. A flow rate of gas gradually changes in a fuel cell, so that lengthening particularly the communication interval causes no problem.

When appliance determination unit 105 determines that a gas appliance in use is a water heater, continuous use of the water heater for a predetermined time or longer is a condition for changing the communication interval. Thus, when the water heater is used for a long time (e.g., 30 minutes), the communication interval is set shorter (e.g., 20 seconds) than the second predetermined interval. Then, when use of the water heater for a long time is detected, the water heater may be forgotten to be turned off, and thus shortening the communication interval enables center device 400 to determine early an abnormal use state, and thus notifying a user. Alternatively, when contact with the user is impossible, center device 400 can instruct gas meter 110 serving as a gas shutoff device about shut-off.

When appliance determination unit 105 determines that a gas appliance in use is an unknown appliance, the communication interval is set to an interval (e.g., 20 seconds) shorter than the second predetermined interval. That is, no condition for changing the communication interval after the gas appliance in use is determined is set. This change in communication interval enables center device 400 to acquire flow rate information and the like from the gas meter at a short interval, and thus enabling monitoring whether there is any abnormal behavior.

It is needless to say that when a stop of use of the gas appliance is detected, the communication interval is returned to the first predetermined interval.

As described above, the present exemplary embodiment enables optimizing responsiveness from center device 400 to gas meter 110 according to each of gas appliances 10 to 12 during use in which the corresponding one of gas appliances 10 to 12 operates. Thus, even when a gas appliance is remotely shut off in response to notification from a user away from home as a service to forgetting to turn off a gas appliance of a gas company operating center device 400, the gas appliance can be shut off quickly, and thus safety can be ensured.

As described above, according to wireless slave unit 200 serving as the wireless device for the gas shutoff device in each of the third exemplary embodiment and the fourth exemplary embodiment, the communication interval is changed according to a gas appliance determined by appliance determination unit 105. Then, when the communication interval is changed according to a kind of determined gas appliance while a minimum required communication frequency is ensured, electric power can be saved while safety performance required according to the gas appliance is ensured.

The present invention is not limited to the above-described exemplary embodiments, and can be implemented in various aspects without departing from the scope of the present invention. For example, in the present exemplary embodiment, the determination flow rate for use of a gas appliance is described as 21 L/H. However, when a gas appliance installed after installation of gas meter 110 is preliminarily known, the determination flow rate can be set corresponding to a minimum flow rate of the gas appliance. Although the communication interval has been described assuming that the first predetermined interval is 300 seconds and the second predetermined interval is 60 seconds, it is needless to say that the communication interval can be arbitrarily set in accordance with battery capacity and required responsiveness.

### INDUSTRIAL APPLICABILITY

As described above, the gas meter serving as the gas shutoff device according to the present invention, and the wireless slave unit serving as the wireless device for the gas shutoff device, can ensure responsiveness while achieving power saving by setting a communication interval according to a gas appliance.

### REFERENCE MARKS IN THE DRAWINGS

100, 110: gas meter (gas shutoff device)
101: flow path
102: flow rate measurement unit
103: shutoff valve
104: controller
105: appliance determination unit
106: vibration detector
200: wireless slave unit (wireless device for gas shutoff device)
201: meter communication unit
202: wireless communication unit
203: communication interval setting unit
300: base station
400: center device

## Claims

1. A gas shutoff device (100, 110) comprising:
a flow rate measurement unit (102) configured to measure a flow rate of gas flowing through a flow path (101);
an appliance determination unit (105) configured to determine a gas appliance in use based on the flow rate of gas measured by the flow rate measurement unit;
a shutoff valve (103) configured to shut off the flow path (101);
a wireless communication unit (202) configured to regularly perform wireless communication with an outside; and
a communication interval setting unit (203) configured to set a communication interval that is an interval in the wireless communication of the wireless communication unit (202), wherein the communication interval setting unit (203) is configured to set the communication interval according to the gas appliance in use determined by the appliance determination unit (105),
**characterized in that**
the communication interval setting unit (203) is configured to set the communication interval to a first predetermined interval when the appliance determination unit (105) determines that no gas appliance is used, and
the communication interval setting unit (203) is configured to set the communication interval to an interval shorter than the first predetermined interval when (i) the appliance determination unit (105) determines that the gas appliance in use is a stove, and (ii-1) gas at a first predetermined flow rate or more is continuously used by the gas appliance in use for a first predetermined time or more, or (ii-2) gas at a flow rate less than the first predetermined flow rate is continuously used by the gas appliance in use for a second predetermined time or more, the second predetermined time being set longer than the first predetermined time.

2. A wireless device for use with a gas shutoff device (100, 110), which wireless device is configured for communicating with a gas shutoff device (100, 110) including a flow rate measurement unit (102) configured to measure a flow rate of gas flowing through a flow path (101), an appliance determination unit (105) configured to determine a gas appliance based on the flow rate of gas measured by the flow rate measurement unit (102), and a shutoff valve (103) configured to shut off the flow path (101), the wireless device comprising:
a meter communication unit (201) configured to obtain at least a determination result in the appliance determination unit (105);
a wireless communication unit (202) configured to periodically perform wireless communication with an outside; and
a communication interval setting unit (203) configured to set a communication interval in the wireless communication unit,
wherein the communication interval setting unit (203) is configured to set the communication interval in response to the determination result obtained by the meter communication unit (201),
wherein
the communication interval setting unit (203) is configured to set the communication interval to a first predetermined interval when the determination result obtained by the meter communication unit shows that no gas appliance is used, and
the communication interval setting unit (203) is configured to set the communication interval to an interval shorter than the first predetermined interval when (i) the determination result obtained by the meter communication unit (201) shows that a gas appliance in use is a stove, and (ii-1) gas at a first predetermined flow rate or more is continuously used by the gas appliance in use for a first predetermined time or more, or (ii-2) gas at a flow rate less than the first predetermined flow rate is continuously used by the gas appliance in use for a second predetermined time or more, the second predetermined time being set longer than the first predetermined time.

## Patentansprüche

1. Gasabsperrvorrichtung (100, 110), die umfasst:
eine Durchflussratenmesseinheit (102), die dazu konfiguriert ist, eine Durchflussrate von Gas zu messen, das durch einen Strömungsweg (101) strömt;
eine Gerätebestimmungseinheit (105), die dazu konfiguriert ist, ein in Gebrauch befindliches Gasgerät basierend auf der von der Durchflussratenmesseinheit gemessenen Gasdurchflussrate zu bestimmen;
ein Absperrventil (103), das dazu konfiguriert ist, den Strömungsweg (101) abzusperren;
eine drahtlose Kommunikationseinheit (202), die dafür konfiguriert ist, regelmäßig drahtlose Kommunikation nach außen durchzuführen; und
eine Kommunikationsintervall-Einstelleinheit (203), konfiguriert zum Einstellen eines Kommunikationsintervalls, das ein Intervall in der drahtlosen Kommunikation der drahtlosen Kommunikationseinheit (202) ist, wobei die Kommunikationsintervall-Einstelleinheit (203) konfiguriert ist, das Kommunikationsintervall gemäß dem von der Gerätebestimmungseinheit (105) ermittelten, benutzten Gasgerät einzustellen,
**dadurch gekennzeichnet, dass**
die Kommunikationsintervall-Einstelleinheit (203) konfiguriert ist, um das Kommunikationsintervall auf ein erstes vorbestimmtes Intervall einzustellen, wenn die Gerätebestimmungseinheit (105) bestimmt, dass kein Gasgerät verwendet wird, und
die Kommunikationsintervall-Einstelleinheit (203) so konfiguriert ist, dass sie das Kommunikationsintervall auf ein Intervall einstellt, das kürzer als das erste vorbestimmte Intervall ist, wenn (i) die Gerätebestimmungseinheit (105) bestimmt, dass das verwendete Gasgerät ein Herd ist, und (ii-1) Gas mit einer ersten vorbestimmten Durchflussrate oder mehr kontinuierlich von dem benutzten Gasgerät für eine erste vorbestimmte Zeit oder länger verwendet wird, oder (ii-2) Gas mit einer Durchflussrate von weniger als der ersten vorbestimmten Durchflussrate kontinuierlich von dem benutzten Gasgerät für eine zweite vorbestimmte Zeit oder länger verwendet wird, wobei die zweite vorbestimmte Zeit länger als die erste vorbestimmte Zeit gesetzt ist.

2. Eine drahtlose Vorrichtung zur Verwendung mit einer Gasabsperrvorrichtung (100, 110), wobei die drahtlose Vorrichtung konfiguriert ist, mit einer Gasabsperrvorrichtung (100, 110) zu kommunizieren, die eine Durchflussraten-Messeinheit (102) enthält, die konfiguriert ist, um eine Durchflussrate eines Gases zu messen, das durch einen Strömungsweg (101) hindurchströmt, eine Gerätebestimmungseinheit (105), die dazu konfiguriert ist, ein Gasgerät basierend auf der Durchflussrate von Gas zu bestimmen, die von der Durchflussratenmesseinheit (102) gemessen wird, und ein Absperrventil (103), das so konfiguriert ist, dass es den Strömungsweg (101) absperrt, wobei das drahtlose Gerät Folgendes umfasst:
eine Zählerkommunikationseinheit (201), die dazu konfiguriert ist, mindestens ein Bestimmungsergebnis in der Gerätebestimmungseinheit (105) zu erhalten;
eine drahtlose Kommunikationseinheit (202), die konfiguriert ist, um periodisch drahtlose Kommunikation nach außen durchzuführen; und
eine Kommunikationsintervall-Einstelleinheit (203), die konfiguriert ist, um ein Kommunikationsintervall in der drahtlosen Kommunikationseinheit einzustellen,
wobei die Kommunikationsintervall-Einstelleinheit (203) so konfiguriert ist, dass sie das Kommunikationsintervall als Reaktion auf das Bestimmungsergebnis einstellt, das von der Messgerät-Kommunikationseinheit (201) erhalten wird,
wobei
die Kommunikationsintervall-Einstelleinheit (203) so konfiguriert ist, dass sie das Kommunikationsintervall auf ein erstes vorbestimmtes Intervall einstellt, wenn das von der Zählerkommunikationseinheit erhaltene Bestimmungsergebnis zeigt, dass kein Gasgerät verwendet wird, und
die Kommunikationsintervall-Einstelleinheit (203) so konfiguriert ist, dass sie das Kommunikationsintervall auf ein Intervall einstellt, das kürzer als das erste vorbestimmte Intervall ist, wenn (i) die Gerätebestimmungseinheit (105) bestimmt, dass das verwendete Gasgerät ein Herd ist, und (ii-1) Gas mit einer ersten vorbestimmten Durchflussrate oder mehr kontinuierlich von dem benutzten Gasgerät für eine erste vorbestimmte Zeit oder länger verwendet wird, oder (ii-2) Gas mit einer Durchflussrate von weniger als der ersten vorbestimmten Durchflussrate kontinuierlich von dem benutzten Gasgerät für eine zweite vorbestimmte Zeit oder länger verwendet wird, wobei die zweite vorbestimmte Zeit länger als die erste vorbestimmte Zeit gesetzt ist.

## Revendications

1. Dispositif de coupure de gaz (100, 110) comprenant :
un unité de mesure de débit (102) configurée pour mesurer un débit de gaz s'écoulant à travers une voie de passage (101) ;
une unité de détermination d'appareil (105) configurée pour déterminer un appareil à gaz en train d'être utilisé, sur la base du débit de gaz mesuré par l'unité de mesure de débit ;
une soupape de coupure (103) configurée pour couper la voie de passage (101) ;
une unité de communication sans fil (202) configurée pour réaliser régulièrement une communication sans fil avec un extérieur ; et
une unité de réglage d'intervalle de communication (203) configurée pour régler un intervalle de communication qui est un intervalle dans la communication sans fil de l'unité de communication sans fil (202), dans lequel l'unité de réglage d'intervalle de communication (203) est configurée pour régler l'intervalle de communication selon l'appareil à gaz en train d'être utilisé déterminé par l'unité de détermination d'appareil (105),
**caractérisé en ce que**
l'unité de réglage d'intervalle de communication (203) est configurée pour régler l'intervalle de communication à un premier intervalle prédéterminé lorsque l'unité de détermination d'appareil (105) détermine qu'aucun appareil à gaz n'est utilisé, et
l'unité de réglage d'intervalle de communication (203) est configurée pour régler l'intervalle de communication à un intervalle plus court que le premier intervalle prédéterminé lorsque (i) l'unité de détermination d'appareil (105) détermine que l'appareil à gaz en train d'être utilisé est une cuisinière, et (ii-1) du gaz à un premier débit prédéterminé ou plus est utilisé en continu, par l'appareil à gaz en train d'être utilisé, pendant une première durée prédéterminée ou plus, ou (ii-2) du gaz à un débit inférieur au premier débit prédéterminé est utilisé en continu, par l'appareil à gaz en train d'être utilisé, pendant une seconde durée prédéterminée ou plus, la seconde durée prédéterminée étant réglée pour être plus longue que la première durée prédéterminée.

2. Dispositif sans fil destiné à être utilisé avec un dispositif de coupure de gaz (100, 110), lequel dispositif sans fil est configuré pour communiquer avec un dispositif de coupure de gaz (100, 110) incluant une unité de mesure de débit (102) configurée pour mesurer un débit de gaz s'écoulant à travers une voie de passage (101), une unité de détermination d'appareil (105) configurée pour déterminer un appareil à gaz sur la base du débit de gaz mesuré par l'unité de mesure de débit (102), et une soupape de coupure (103) configurée pour couper la voie de passage (101), le dispositif sans fil comprenant :
une unité de communication de compteur (201) configurée pour obtenir au moins un résultat de détermination dans l'unité de détermination d'appareil (105) ;
une unité de communication sans fil (202) configurée pour réaliser périodiquement une communication sans fil avec un extérieur ; et
une unité de réglage d'intervalle de communication (203) configurée pour régler un intervalle de communication dans l'unité de communication sans fil,
dans lequel l'unité de réglage d'intervalle de communication (203) est configurée pour régler l'intervalle de communication en réponse au résultat de détermination obtenu par l'unité de communication de compteur (201),
dans lequel
l'unité de réglage d'intervalle de communication (203) est configurée pour régler l'intervalle de communication à un premier intervalle prédéterminé lorsque le résultat de détermination obtenu par l'unité de communication de compteur montre qu'aucun appareil à gaz n'est utilisé, et
l'unité de réglage d'intervalle de communication (203) est configurée pour régler l'intervalle de communication à un intervalle plus court que le premier intervalle prédéterminé lorsque (i) le résultat de détermination obtenu par l'unité de communication de compteur (201) montre qu'un appareil à gaz en train d'être utilisé est une cuisinière, et (ii-1) du gaz à un premier débit prédéterminé ou plus est utilisé en continu, par l'appareil à gaz en train d'être utilisé, pendant une première durée prédéterminée ou plus, ou (ii-2) du gaz à un débit inférieur au premier débit prédéterminé est utilisé en continu, par l'appareil à gaz en train d'être utilisé, pendant une seconde durée prédéterminée ou plus, la seconde durée prédéterminée étant réglée pour être plus longue que la première durée prédéterminée.
